# FASCICULE DE BREVET EUROPEEN

(11) **EP 3 784 032 B1**
(45) Date de publication et mention de la délivrance du brevet: **29.05.2024**
(21) Numéro de dépôt: 19719336.0
(22) Date de dépôt: 26.04.2019
(51) Int. Cl.: A01K 55/00, A01K 51/00, A01N 25/18, A01N 65/00

(54) **FORMULATION LIQUIDE POUR ENFUMOIR POUR RUCHES**
FLÜSSIGE FORMULIERUNG FÜR IMKER-SMOKER
LIQUID FORMULATION FOR BEEHIVE SMOKER

(30) Priorité: 27.04.2018 FR 1853749
(43) Date de publication de la demande: 03.03.2021
(73) Titulaire: Apisolis, 31790 Saint-Jory (FR)
(72) Inventeur: ALBRESPY, Damien, 31790 SAINT-JORY (FR)
(74) Mandataire: Regimbeau
(86) Numéro de dépôt international: PCT/EP2019/060815
(87) Numéro de publication internationale: WO 2019/207145

(56) Documents cités:
- EP-A2- 2 001 289
- WO-A2-2015/130602
- AU-A1- 2013 275 206
- FR-A1- 3 055 770
- US-A1- 2015 297 483

## Description

La présente invention concerne l'utilisation d' une formulation, en particulier une formulation liquide, dans des systèmes électriques pour enfumage de ruches.

Plus particulièrement, la formulation liquide est dépourvue de propylèneglycol et/ou de polymères synthétiques d'oxydes d'éthers tels que les polyéthylèneglycols comme on le connaît dans l'art antérieur.

On sait que lorsqu'un apiculteur désire intervenir à l'intérieur d'une ruche, par exemple pour y poser des cadres ou pour en retirer le miel, il doit préalablement éloigner les abeilles. Habituellement, cette opération préalable consiste à les enfumer en utilisant un appareil bien connu : l'enfumoir. Un enfumoir traditionnel comprend une cavité remplie d'un produit combustible à travers laquelle on souffle de l'air, généralement en utilisant un soufflet. Le fonctionnement est alors le suivant - l'air frais soufflé à travers la matière incandescente contenue dans la cartouche permet tout d'abord d'entretenir la combustion ; - l'air d'admission ainsi soufflé voit sa température augmenter au fur et à mesure qu'il traverse la cartouche en combustion, au contact de laquelle il se charge par ailleurs en fumée ; - le mélange de fumée chaude ainsi produit est ensuite soufflé dans une buse que l'apiculteur dirige sur les abeilles. Dans un tel type d'appareil, il s'agit de la fumée résultant de la combustion d'un corps, rendue plus ou moins opaque du fait de particules solides et/ou liquides. En particulier le document WO2011044011 décrit un enfumoir à abeilles qui est capable de produire de la fumée sur demande pour maîtriser les abeilles, l'enfumoir comportant un élément électrique chauffant à bobine ou à grille permettant d'obtenir rapidement une combustion lente du combustible (bois, paille, sciure, etc.). Quand la fumée n'est plus nécessaire, l'élément chauffant peut être arrêté, de sorte qu'il n'est pas nécessaire d'entretenir continuellement une flamme dans l'enfumoir.

FR2865893 décrit un enfumoir comprenant un récipient métallique surmonté d'un couvercle de forme sphérique conique muni d'une ouverture. Cet enfumoir contient la matière à brûler et communique avec un moyen de production de flux d'air qui consiste en un compresseur équipé d'une turbine fonctionnant électriquement.

On constate en pratique qu'un tel enfumoir traditionnel par combustion de matière, de type connu, présente de graves inconvénients. En effet, si la fumée ainsi soufflée éloigne bien les abeilles, on constate qu'elle produit aussi des effets secondaires particulièrement préjudiciables. Cette fumée étant chaude, elle peut exciter les abeilles qui risquent de piquer l'apiculteur ou toute personne aux alentours. La température de la fumée en sortie de buse peut brûler les abeilles les plus proches.

En outre, la production de fumée pour enfumage de ruche par combustion de matériaux organiques tels que le bois, la sciure, les feuilles sèches, le foin humide, des morceaux de coton hydrophile, des granulés, par exemple est connue pour produire du goudron et d'autres composés potentiellement nocifs ou toxiques. La fumée ainsi générée est susceptible de contaminer les abeilles, le miel contenu dans la ruche et de poser un risque sanitaire pour l'apiculteur qui est exposé aux fumées plus longtemps et plus régulièrement encore que les ruches.

Le document US2005262756 décrit un enfumoir comprenant un boîtier, un réservoir, un générateur de vapeur couplé au réservoir et une source de chaleur pour chauffer le générateur de vapeur. Un fluide provenant du réservoir peut être transféré au générateur de vapeur par alimentation par gravité ou par un mécanisme de pompe. Le fluide comprend un matériau formant une vapeur tel que du glycol et de la fumée liquide (extrait de fumée liquide). Un ingrédient essentiel du fluide de vapeur est l'extrait de fumée liquide similaire au type employé dans la cuisine (pour donner le goût fumé aux aliments) et largement disponible sur le marché. Pour fournir une vapeur qui reste stable pendant une période de temps suffisante, la fumée liquide est mélangée avec du glycol, du triéthylène glycol, de la glycérine ou analogue.

Ce dispositif ne permet pas de maîtriser les conditions de pulvérisation en ce qui concerne la température et la concentration en composition glycolée.

Les compositions glycolées proposées dans l'art antérieur ne sont pas très efficaces car elles sont du type de celles connues pour les cigarettes électroniques, en tant que liquide de remplissage dans lequel sont éventuellement ajoutés glycérol, arômes et nicotine, afin de produire un aérosol, une vapeur simulant la fumée de combustion du tabac. L'effet sur les abeilles est limité.

Le Document FR3031352 divulgue un enfumoir électronique à abeilles comportant un récipient contenant une composition glycolée, un moyen de pulvérisation de ladite composition glycolée et un générateur de flux d'air. Il est constitué d'un logement pour l'installation d'une cartouche contenant une composition glycolée dans laquelle plonge une mèche entourée par une résistance électrique alimentée par une batterie. Une turbine électrique crée un flux d'air pulsé débouchant dans l'enceinte qui débouche dans un conduit de diffusion de la vapeur créée, simulant une fumée.

Le document FR3055770 décrit une composition active destinée à l'enfumage d'abeilles contenant au moins 15% de citrate de triéthyle ainsi qu'un enfumoir à abeilles comportant une enceinte dans laquelle est disposée une cartouche interchangeable contenant ladite composition active contenant au moins 15% de triester d'acide citrique ou de citrate de triéthyle, en phase liquide pouvant être volatilisée sous la forme d'un nuage de vapeur.

Les formulations liquides de ces dispositifs sont du type de ce que l'on trouve dans les formulations de type « e-cigarette » (ou liquide d'atomisation d'e-cigarette) qui comprend habituellement des solvants réguliers tel que le propylène glycol, PEG (polyéthylène glycol) ainsi que la glycérine végétale (monoglycérol).

En effet, ces formulations liquides sont généralement composées de propylène glycol et/ou de glycérol en tant que solvants. Le propylèneglycol et le glycérol ont tous deux la propriété de se vaporiser en formant une vapeur qui donne l'impression d'une fumée de cigarette.

Même si le propylèneglycol, le glycérol et le polyéthylèneglycol sont considérés comme sûrs pour la consommation humaine (qualité alimentaire) et peuvent être utilisés seuls ou en combinaison, cela ne prend pas en considération le fait qu'ils sont chauffés à des températures élevées qui sont souvent variables avant d'être inhalés. Dans le cas de PEG 400 (polyéthylèneglycol 400) de taille moléculaire inégalement dispersée, qui est actuellement populaire dans les formulations liquides, le résultat est également irrégulier et les contaminants sont créés car le liquide s'échauffe parfois au-dessus du point d'ébullition. En outre, l'art antérieur dans le domaine des ces formulations liquides ne se préoccupe pas de la délivrance d'ingrédients ou de principes actifs pour une utilisation médicinale et thérapeutique. En effet, dans le cas des ruches il peut être opportun de procéder à des traitements préventifs et/ou curatifs contre les parasites des abeilles comme le varroa par exemple.

Le varroa est un est un acarien parasite de l'abeille adulte ainsi que des larves et des nymphes. Il est originaire de l'Asie du Sud-Est, où il vit aux dépens de l'abeille asiatique Apis cerana qui résiste à ses attaques, contrairement à l'abeille domestique européenne Apis mellifera. Ce parasite provoque des pertes économiques importantes en apiculture et il est une des causes de la diminution du nombre d'abeilles.

Les traitements contre le varroa consistent à utiliser des principes actifs chimiques tels que l'amitraze ou le fluvamilate. Ces traitements sont lourds et non sans conséquences sur l'homme, les abeilles, le miel ou l'environnement. Des traitements alternatifs à base d'acide formique, camphre, thymol, eucalyptol, menthol, acide oxalique ont été proposés avec des résultats variables et nécessitent des formulations et modes d'application particuliers (bandes imbibées, formulations alcooliques s'évaporant plus ou moins rapidement...) .

Il existe un besoin en des formulations liquides pour enfumoir électronique pour ruches ne présentant pas les inconvénients de l'art antérieur et en particulier qui soit dépourvus de risques toxicologiques tant pour les abeilles que pour l'apiculteur, ne laissent pas de résidus dans le miel, sont efficaces pour calmer les abeilles et permettent aussi un traitement des parasites communément rencontrés dans lesdites ruches, en particulier le varroa.

La présente invention concerne ainsi, selon la revendication 1, l'utilisation d' une formulation liquide pour enfumoir électronique pour ruche comprenant, ou consistant en, :
- un solvant comprenant, ou consistant en, un mélange de propane-1,3-diol et de glycérol et
- un principe actif comprenant au moins un liquide organique volatil.

Selon un mode de réalisation le liquide organique volatil, est choisi dans le groupe constitué par les huiles essentielles volatiles, les phéromones à chaînes grasses et leurs mélanges Selon un mode particulier, le liquide organique volatil est une huile essentielle volatile. Plus particulièrement il s'agit d'une huile essentielle végétale volatile.

Les huiles essentielles sont obtenues par diverses méthodes d'extraction d'une matière végétale botaniquement définie. Les huiles essentielles sont des mélanges complexes comprenant les composés odoriférants et volatils d'une plante.

En particulier, de par leurs propriétés antibactériennes, les huiles essentielles trouvent de nombreuses applications en médecine humaine ou vétérinaire, dans le domaine phytosanitaire pour la lutte contre les stress biotiques des cultures par exemple, dans la cosmétique, la parfumerie ou encore l'agroalimentaire. Cependant de par leur volatilité très marquée et difficilement contrôlable, leur utilisation à grande échelle est limitée. Pour certains domaines d'application cette forte volatilité des huiles essentielles pose problème. Elles se volatilisent trop rapidement (ou pas assez) selon les conditions météorologiques et peuvent voir leur activité réduite dans le temps.

Le contrôle de la volatilité des mélanges constitués de liquides organiques volatils, peut se faire pas inclusion ou encapsulation dans une matrice neutre permettant un relargage ralenti comme évoqué ci-avant. Une telle encapsulation est cependant complexe technologiquement, souvent trop séquestrante et onéreuse.

Dans le domaine agricole, voire apiculture, l'utilisation de d'huiles essentielles se développe et constitue une alternative écologique à la lutte contre les parasites. Cependant la formulation de ces composés généralement sous la forme de liquides organiques est difficile car il convient de bien contrôler et maîtriser leur diffusion afin d'obtenir l'effet recherché.

Par volatilité en ce qui concerne les huiles essentielles végétales volatiles, on entend la capacité d'une substance, généralement liquide, à température ambiante (de l'ordre de 20°C) et à pression atmosphérique (environ 760 mm Hg) à se vaporiser. La volatilité peut être définie comme le rapport de la fraction molaire de la phase gazeuse sur la fraction molaire de la phase liquide dans une situation d'équilibre, pour un liquide donné.

Selon l'invention, le liquide organique volatil, en particulier l'huile essentielle végétale volatile, est volatil à température ambiante (ie 20°C) et par l'expression volatil à température ambiante on entend que sa pression de vapeur saturante à 20°C est supérieure à 0,01 mm de Hg, préférentiellement elle est comprise entre 0,01 et 20, de manière plus préférentielle entre 0,01 et 10, plus préférentiellement entre 0,01 et 5 (en mm Hg à 20°C).

La notion de volatilité repose sur une définition précise qui est la pression de vapeur saturante (ou tension de vapeur). C'est la pression à laquelle la phase gazeuse d'une substance est en équilibre avec sa phase liquide ou solide, à une température donnée, dans un système fermé. La pression de vapeur saturante est liée à la tendance des molécules à passer de l'état liquide (ou solide) à l'état gazeux. A titre d'information, la pression de vapeur saturante de l'eau à 20°C est de 17.5 mm Hg ; celle du butane est de 1650 mm Hg ; celle du propanol est de 18 mm Hg.

Le choix du Propane-1,3-diol réside dans sa pression de vapeur saturante à 20°C qui est inférieure à 0,1 mbar à 20°C et est donc inférieure à celle des propylèneglycol et autres polyéthylèneglycol et polypropylèneglycol.

Cela permet une génération de vapeur pour des températures de chauffage moindre que celles mises en œuvre avec ces autres solvants.

Associé aux huiles essentielles végétales facilement volatiles, la formulation permet une génération aisée de vapeur en limitant la formation de composés toxiques tant pour le miel que pour les insectes, l'apiculteur ou encore l'environnement.

La notion de volatilité repose sur une définition précise qui est la pression de vapeur saturant (ou tension de vapeur). C'est la pression à laquelle la phase gazeuse d'une substance est en équilibre avec sa phase liquide ou solide, à une température donnée, dans un système fermé. La pression de vapeur saturante est liée à la tendance des molécules à passer de l'état liquide (ou solide) à l'état gazeux, une substance possédant une pression de vapeur saturante élevée (vis-à-vis de la pression atmosphérique) à température ambiante (env 20°C) est dite volatile. A titre d'information, la pression de vapeur saturante de l'eau à 20°C est de 17.5 mm Hg ; celle du butane est de 1650 mm Hg ; celle du propanol est de 18 mm Hg.

Les huiles essentielles végétales volatiles aux propriétés apaisantes vis-à-vis des abeilles et/ou antiparasitaires vis-à-vis des parasites des ruches permettent un traitement particulièrement adapté aux ruches tout en préservant l'environnement.

L'invention vise aussi, selon un autre mode de réalisation, l'utilisation d' une formulation selon le premier mode de réalisation, caractérisée en ce que le liquide organique volatil est une huile essentielle volatile choisie dans le groupe constitué par l'huile essentielle d'eucalyptus, l'huile essentielle de lavande, l'huile essentielle de thym, l'huile essentielle de citronnelle, l'huile essentielle de menthe poivrée, l'huile essentielle de sauge, huile essentielle de clou de girofle, huile essentielle de Géranium, préférentiellement Géranium rosat, l'huile essentielle d'amende amère, l'huile essentielle de lavandin, ainsi que leurs mélanges.

Une telle formulation est particulièrement adaptée à une utilisation pour la visite de ruche ou pour le traitement préventif et/ou curatif de parasite de ruche, en particulier le varroa.

L'invention vise ainsi l'utilisation d'une formulation pour la génération de nuage de vapeur via un enfumoir électronique, en particulier pour la visite de ruche. Le nuage de vapeur généré simule de la fumée comme expliqué ci-avant.

L'invention vise ainsi l'utilisation d'une formulation pour la génération de nuage de vapeur via un enfumoir électronique, en particulier pour le traitement préventif et/ou curatif de parasite de ruche, plus particulièrement encore le varroa.

L'invention vise ainsi l'utilisation d'une Formulation liquide dans un enfumoir électronique pour ruche pour la génération de nuage de vapeur, ladite formulation comprenant :
- un solvant comprenant, ou consistant en, un mélange de propane-1,3-diol et de glycérol et
- au moins liquide organique volatil.

L'utilisation selon l'invention consiste ainsi à placer la formulation de l'invention dans le récipient d'un enfumoir électrique/électronique du type de ceux décrit dans le document FR3031352. Un tel enfumoir comporte un récipient contenant la formulation en question, un moyen de pulvérisation de ladite formulation et un générateur de flux d'air. Il comprend un logement contenant la formulation dans laquelle plonge une mèche entourée par une résistance électrique alimentée par une batterie. Une turbine électrique crée un flux d'air pulsé débouchant dans une enceinte qui débouche dans un conduit de diffusion de la vapeur créée, simulant une fumée.

L'invention vise ainsi l'utilisation d'une formulation liquide telle que décrite ici, dans un enfumoir électronique pour ruche pour la génération de nuage de vapeur, en particulier pour visiter une ruche.

L'invention vise ainsi l'utilisation d'une formulation liquide telle que décrite ici, dans un enfumoir électronique pour ruche pour la génération de nuage de vapeur, en particulier pour le traitement préventif et/ou curatif de parasite de ruche, plus particulièrement encore le varroa.

Selon un mode de réalisation particulier l'utilisation de l'huile essentielle végétale volatile de la formulation comprend un mélange d'huile essentielle de clou de girofle, d'huile essentielle d'amende amère, d'huile essentielle de thym.

Une telle formulation est particulièrement adaptée à une utilisation pour la génération de nuage de vapeur pour la visite de ruche.

Selon un autre mode d'utilisation l'huile essentielle végétale volatile de la formulation comprend un mélange d'huile essentielle de citronnelle, d'huile essentielle d'amende amère, d'huile essentielle de thym, d'huile essentielle de lavandin. Une telle formulation est particulièrement adaptée à une utilisation pour la visite de ruche.

Selon un autre mode d'utilisation l'huile essentielle végétale volatile de la formulation comprend un mélange d'huile essentielle de citronnelle, d'huile essentielle de géranium, d'huile essentielle de thym, d'huile essentielle de lavandin, d'huile essentielle de menthe et d'huile essentielle d'eucalyptus. Une telle formulation est particulièrement adaptée à une utilisation pour la visite de ruche de par son effet apaisant sur les abeilles en plus de l'effet opacifiant créé par la vapeur.

Dans le cadre de la présente invention la notion de fumée ou vapeur générée par un enfumoir électronique auquel sont destinées l'utilisation des s'entend comme un nuage plus ou moins opacifiant, blanchâtre et laiteux de particules vaporisés s'exhalant d'un corps plus chaud (voire plus humide s'il s'agit d'eau) que l'air, en l'occurrence ici la formulation de l'invention chauffée et s'apparente plus à un nuage de vapeur comme ce qui est connu pour les cigarettes électroniques. Ainsi même si l'on parle d'enfumoir auquel est destinée la formulation selon l'invention, ledit appareillage ne produit par une fumée au sens strict du terme. L'enfumoir ainsi destiné à recevoir les formulations est un enfumoir de type enfumoir électronique générant une vapeur du type d'un nuage de vapeur opalescent et non pas une fumée de combustion d'un corps incandescent à proprement parler.

Selon un mode de réalisation particulier l'huile essentielle végétale volatile de la formulation est une huile essentielle de thym. Une telle formulation est particulièrement adaptée à une utilisation pour le traitement préventif ou curatif de parasite des ruches en particulier le varroa.

L'invention vise encore, dans un troisième mode de réalisation, l'utilisation d' une formulation selon l'un des modes de réalisation précédents, caractérisée en ce que la quantité de solvant est comprise, en pourcentage en poids de la formulation, entre 70% et 95%, particulièrement entre 75% et 90%, plus particulièrement encore entre 75% et 90%, voire entre 80% et 90%.

L'invention concerne encore, dans un quatrième mode de réalisation, l'utilisation d' une formulation selon l'un des modes de réalisation précédents, caractérisé en ce que la quantité de liquide organique volatil, en particulier d'huile essentielle végétale volatile, est comprise, en pourcentage en poids de la formulation, entre 5% et 30%, particulièrement entre 10% et 30%, plus particulièrement encore entre 15% et 25%.

En effet selon la destination de la formulation à savoir pour visite de ruche pour le traitement de parasites de ruches, les quantités de liquide organique volatil, en particulier d'huile essentielle végétale volatile varient dans des fourchettes différentes.

Ainsi dans le cas de formulation pour visite de ruche, la quantité de liquide organique volatil, en particulier d'huile essentielle végétale volatile, en pourcentage en poids de la formulation, sera comprise entre 5 et 20%, préférentiellement entre 10 et 15%.

Dans le cas de formulation pour le traitement ou la prévention de parasite(s) de ruche, la quantité de liquide organique volatil, en particulier d'huile essentielle végétale volatile, en pourcentage en poids de la formulation, sera comprise entre 10 et 30%, préférentiellement entre 15 et 25%.

Selon une sixième mode de réalisation, la présente invention concerne l'utilisation d' une formulation selon l'un des modes de réalisation précédents, caractérisé en ce que le solvant comprend, en pourcentage en poids par rapport à la formulation, entre 50% et 90% de propane-1,3-diol, particulièrement entre 60% et 90%, plus particulièrement entre 60 et 80%.

Selon une septième mode de réalisation, concerne l'utilisation d' une formulation selon l'un des modes de réalisation précédents, caractérisé en ce que le solvant comprend, en pourcentage en poids par rapport à la formulation, entre 5% et 30% de glycérol, plus particulièrement entre 5% et 25%, plus particulièrement encore entre 10 et 20%.

En effet selon la destination de la formulation à savoir pour visite de ruche pour le traitement de parasites de ruches, les quantités de glycérol varient dans des fourchettes différentes.

Ainsi dans le cas de formulation pour visite de ruche, la quantité de glycérol, en pourcentage en poids de la formulation, sera comprise entre 5% et 20%, préférentiellement entre 5 et 17%.

Dans le cas de formulation pour le traitement ou la prévention de parasite(s) de ruche, la quantité de glycérol, en pourcentage en poids de la formulation, sera comprise entre 1% et 30%, préférentiellement environ 25%.

Les huiles essentielles (H. E.) sont obtenues par diverses méthodes d'extraction d'une matière végétale botaniquement définie. Les huiles essentielles sont des mélanges complexes comprenant les composés odoriférants et volatils d'une plante. La présente invention concerne aussi l'utilisation par fumigation via un dispositif de type enfumoir électronique, d'une formulation selon l'un des modes de réalisation précédent pour la visite de ruches ou pour le traitement ou la prévention de l'infestation des ruches au varroa.

Selon un mode de réalisation, l'utilisation d' une formulation comprend, en pourcentage en poids par rapport au poids de la formulation :
- un solvant comprenant 80% de propane-1,3-diol et 10% de glycérol et
- 10% d'un mélange d'huiles essentielles comprenant huile essentielle de clou de girofle, huile essentielle d'huile d'amende amère et huile essentielle de thym, de préférence dans un ratio massique compris entre 0.5/1/2 et 1/3/5, respectivement.

Selon un mode de réalisation, l'utilisation d' une formulation comprend, en pourcentage en poids par rapport au poids de la formulation :
- un solvant comprenant 70% de propane-1,3-diol et 15% de glycérol et
- 15% d'un mélange d'huiles essentielles comprenant huile essentielle de citronnelle, huile essentielle d'huile d'amande amère, d'huile essentielle de thym et huile essentielle de lavandin, de préférence dans un ratio en poids compris entre 1/1/4/4 et 2/2/5/5.

Selon un mode de réalisation, l'utilisation d' une formulation comprend, en pourcentage en poids par rapport au poids de la formulation :
- un solvant comprenant 80% de propane-1,3-diol et 5% de glycérol et
- 15% d'un mélange d'huiles essentielles comprenant huile essentielle de citronnelle, huile essentielle d'huile de Géranium, huile essentielle d'eucalyptus, huile essentielle de thym, huile essentielle de menthe poivrée, et huile essentielle de lavandin, de préférence dans un ratio massique compris entre 0,5/1/2/1/2/2 et 1/2/4/2/4/4.

Selon un mode de réalisation, l'utilisation d' une formulation comprend, en pourcentage en poids par rapport au poids de la formulation :
- un solvant comprenant 50% de propane-1,3-diol et 25% de glycérol et
- 25% d'huile essentielle de thym.

Selon un mode de réalisation, l'utilisation d' une formulation comprend, en pourcentage en poids par rapport au poids de la formulation :
- un solvant comprenant 60% de propane-1,3-diol et 25% de glycérol et
- 15% d'huile essentielle de thym.

L'invention vise aussi une méthode de visite de ruche comprenant les étapes suivantes :
- i) vaporiser une formulation liquide selon l'un des modes de réalisation précédents via un dispositif de type enfumoir électronique doté d'un réservoir contenant ladite formulation, d'un moyen de vaporisation de ladite formulation et d'un moyen de génération d'un flux d'air,
- ii) distribuer la vapeur formée à l'étape i) sur et dans la ruche.

L'invention vise aussi une méthode traitement ou de prévention de parasite des ruches comprenant les étapes suivantes :
- i) vaporiser une formulation liquide selon l'un des modes de réalisation précédents comprenant au moins une huile essentielle de thym, via un dispositif de type enfumoir électronique doté d'un réservoir contenant ladite formulation, d'un moyen de vaporisation de ladite formulation et d'un moyen de génération d'un flux d'air,
- ii) distribuer la vapeur formée à l'étape i) sur et dans la ruche.

Selon un mode de réalisation de la méthode, le parasite est le varrao.

Dans un autre aspect idéal il est fourni une amélioration de formulation liquide écologique et biodégradable qui est composée uniquement d'ingrédients naturels, agrosourcés ou biosourcés. En effet le propane-1,3-diol de la formulation selon l'invention est biosourcé. Il peut être produit à partir de sirop de maïs.

Des modes de réalisation de la présente invention concernent l'utilisation d' une formulation liquide pour des enfumoir de ruche électronique, dépourvue ou substantiellement dépourvue de diols à chaîne courte tels que le propylèneglycol et des polymères d'éther synthétiques déjà décrits comme le PEG (polyéthylèneglycol) / PPG (polypropylèneglycol) comme on le voit dans l'art antérieur.

Selon un autre aspect, un kit, non compris dans l'invention, pour recharger un enfumoir électronique pour ruche comprend (i) une formulation liquide selon l'un des modes de réalisation précédents et (ii) des instructions pour remplir la formulation liquide dans l'enfumoir, en particulier dans le réceptacle de l'enfumoir électronique.

Dans encore un autre aspect, comprend une cartouche, non compris dans l'invention, d'enfumoir électronique contenant une formulation liquide selon l'invention. Dans un autre aspect, il est fourni une bouteille comprenant une formulation selon l'un des modes de réalisation précédents. Encore plus particulièrement, le solvant utilisé pour la formulation de l'invention comprend du propane-1,3-diol en raison des méthodes de production écologiques récentes et de son innocuité éprouvée, de sa résistance à la température et à l'oxydation. Comme explicité plus avant un tel solvant présente aussi les avantages de pression de vapeur saturante basse permettant sa vaporisation, et donc la production de vapeur, sans nécessité de recourir à un chauffage à des températures préjudiciables aux abeilles ou risquant de générer des composés indésirables.

Le propane-1,3-diol présente un profil de sécurité remarquable et une meilleure stabilité thermique et chimique que le propylène glycol en raison de leur structure moléculaire et aussi d'une pression de vapeur saturant plus faible facilitant sa vaporisation. Un tel ingrédient est maintenant considéré comme étant naturel en raison des procédés pour produire une forme très pure en fermentant les sucres de maïs. Ils sont désormais labellisés ECOCERT et FDA, 100% naturels et issus du développement durable. Son comportement unique en fait un parfait remplacement du propylène glycol.

Le propane-1,3-diol est mélangé à un co-solvant tel que le glycérol.

Un exemple d'enfumoir électronique adapté pour une formulation ou une recharge contenant une formulation selon l'invention est du type de celui décrit dans le document FR3031652. Cependant, tout autre enfumoir électronique doté d'une résistance électrique permettant le chauffage et la vaporisation de la formulation peut être convenable.

Des composants supplémentaires peuvent être ajoutés à la formulation pour améliorer sa stabilité ou sa viscosité, son arôme ou encore son goût. De tels composants supplémentaires incluent, mais ne sont pas limités à des colorants, des antioxydants des conservateurs, agents chélatants, viscomodulateurs, odorisants, amérisants, opacifiants, agents de suspension, liants, épaississants, co-solvants et mélanges de ceux-ci, y compris, mais sans s'y limiter, gomme de xanthane, carboxyméthylcellulose, carboxyéthylcellulose, hydroxypropylcellulose, méthylcellulose, cellulose microcristalline, amidons, dextrines, maltodextrines, polyols (y compris les alcools de sucre tels que le sorbitol, le lactitol ou le mannitol), les hydrates de carbone (par exemple lactose), l'alginate de propylèneglycol, la gomme gellane, guar, pectine, gomme adragante, gomme arabique, caroube, gomme arabique, éther et acétates de sucre ou autres esters d'acides tels que acétate de diméthyle, acétate d'éthyle, acétate d'isopropyle, éthylhexyle l'acétate, l'acétate de butyle, le citrate de triéthyle, le butyrate de diméthyle et similaires.

De manière avantageuse, la formulation, non compris dans l'invention, peut comprendre de l'acide citrique ou un sel de cet acide ou encore un ester de cet acide. En particulier il peut s'agir un monoester, d'un diester ou d'un triester.

L'acide citrique, sans modifier le goût de la formulation, augmente l'intensité de la perception olfactogustative par les abeilles.

La formulation liquide comprend en outre de l'acide citrique ou un sel de l'acide citrique ou un ester de l'acide citrique La quantité d'acide citrique, ou d'un sel de celui-ci, ou d'un ester de celui-ci, pourra être comprise entre 1 et 10% en poids de la formulation.

L'acide citrique est un acide tricarboxylique α-hydroxylé. Un ester d'acide citrique adapté peut être un triester d'acide citrique dans lequel les trois fonctions carboxyliques sont estérifiées par un groupe alkyl C1 à C6, en particulier un alkyl en C2. Ainsi de manière préférée l'ester d'acide citrique est le citrate de triéthyle. Un tel triester de l'acide citrique est présent dans la formulation selon l'invention en quantité comprise entre 1 et 10%, particulièrement entre 2 et 8 % en poids, de la formulation.

Ce triester d'acide citrique à un rôle émulsifiant et assure une meilleure homogénéité et une meilleure stabilité de la formulation selon l'invention.

La formulation, non compris dans l'invention, peut aussi contenir, à titre d'agent gustatif, au moins un agent amérisant ayant une faculté de répulsif à insecte. Un tel agent amérisant peut être choisi dans le groupe comprenant la quassine ou son équivalent de synthèse le Benzoate de dénatonium, un arôme d'amande amère ou sa molécule active le benzaldéhyde.

La quassine est un composé blanc cristallin au goût très amer (effet désagréable perceptible au goût dès 10 ppm seulement, ce pourquoi elle est utilisée comme dénaturant pour certains alcools industriels, et dans certains cosmétiques).

Ce composé a été découvert dans l'écorce d'un petit arbre tropical de la famille des Simaroubaceae, le Quassia amara dont elle est extraite.

Il est utilisé comme arôme alimentaire, mais intéresse beaucoup l'ethnopharmacologie pour ses propriétés de répulsif anti-insectes.

Le benzoate de dénatonium est un sel benzoïque de dénatonium au goût très amer. Il a été découvert en 1958 lors de recherche sur les anesthésiques locaux. Il est utilisé comme répulsif pour prévenir l'ingestion des produits ménagers et des antigels, dans les vernis à ongles dans la lutte contre l'onychophagie et sert à dénaturer l'éthanol.

Si on le souhaite, un ou plusieurs aromatisants peuvent être ajoutés à la composition.

### EXEMPLES DE FORMULATIONS POUR VISITE DE RUCHE OU POUR TRAITEMENT ANTIPARASITAIRE ANTI VARROA.

### Formulations pour visite de ruche

Formulation 1 :
a) Solvant :
   - 70 à 90% en poids de la formulation, en Propanediol 1,3
   - 5 à 10 % en poids de la formulation, en glycérine
b) 5 à 10%, en poids de la formulation, d'un mélange d'huiles essentielles de clou de girofle, d'amande amère et de thym, ledit mélange comprenant un ratio massique des huiles essentielles de 1/3/5, respectivement.

Formulation 2 :
c) Solvant :
   - 70 à 80% en poids de la formulation, en Propanediol 1,3
   - 10 à 20 % en poids de la formulation, en glycérine
d) 5 à 20%, en poids de la formulation, d'un mélange d'huiles essentielles citronelle, d'amande amère, de thym et de lavandin, ledit mélange comprenant un ratio massique des huiles essentielle de 1/1/5/5, respectivement.

Formulation 3 :
e) Solvant :
   - 80 à 90% en poids de la formulation, en Propanediol 1,3
   - 5 à 15 %, en poids de la formulation, en glycérine
f) 10 à 15%, en poids de la formulation, d'un mélange d'huiles essentielles citronnelle, de géranium, d'eucalyptus, de thym, de menthe poivrée et de lavandin, ledit mélange comprenant un ratio massique des huiles essentielles de 1/2/2/2/4/4, respectivement.

Ces formulations sont introduites dans le réservoir d'un enfumoir du type de celui décrit dans le document FR3031652. La vapeur générée par la mise sous tension de la résistance et entraînée par le flux d'air permet d'obtenir un voile opalescent permettant d'apaiser et/ou d'éloigner les abeilles d'une ruche avant son ouverture. Apres ouverture, le nuage reste aussi en suspension entre les cadres et permet de calmer les abeilles ou les éloigner.

Formulations pour traitement de ruche anti varroa

Formulation 4 :
a) Solvant :
   - 40 à 70% en poids de la formulation, en Propanediol 1,3
   - 15 à 30 %, en poids de la formulation, en glycérine
b) 15 à 30%, en poids de la formulation, d'huile essentielle de thym.

Cette formulation est introduite dans le réservoir d'un enfumoir du type de celui décrit dans le document FR3031652. La vapeur générée par la mise sous tension de la résistance et entraînée par le flux d'air permet d'obtenir un voile opalescent qui est en suspension entre les cadres de la ruche et permet la délivrance in situ de l'huile essentielle de thym à une dose efficace pour traiter une infestation au varroa.

## Revendications

1. Utilisation d'une formulation liquide dans un enfumoir électronique pour ruche pour la génération de nuage de vapeur, ladite formulation comprenant :
- un solvant comprenant, ou consistant en, un mélange de propane-1,3-diol et de glycérol et
- au moins liquide organique volatil.

2. Utilisation selon la revendication 1, **caractérisée en ce que** le liquide organique volatil est une huile essentielle volatile, plus particulièrement une huile essentielle végétale volatile.

3. Utilisation selon la revendication 2 **caractérisée en ce que** l'huile essentielle volatile est choisie dans le groupe constitué par l'huile essentielle d'eucalyptus, l'huile essentielle de lavande, l'huile essentielle de thym, l'huile essentielle de citronnelle, l'huile essentielle de menthe poivrée, l'huile essentielle de sauge, huile essentielle de clou de girofle, huile essentielle de Géranium, préférentiellement Géranium rosat, l'huile essentielle d'amende amère, l'huile essentielle de lavandin, ainsi que leurs mélanges.

4. Utilisation selon la revendication 3, **caractérisée en ce que** l'huile essentielle végétale comprend un mélange d'huile essentielle de clou de girofle, d'huile essentielle d'amende amère, d'huile essentielle de thym.

5. Utilisation selon l'une des revendications précédentes **caractérisée en ce que** la quantité de solvant est comprise, en pourcentage en poids de la formulation, entre 70% et 95%, particulièrement entre 75% et 90%, plus particulièrement encore entre 75% et 90%, voire entre 80% et 90%.

6. Utilisation selon l'une des revendications précédentes **caractérisée en ce que** la quantité de liquide organique volatil est comprise, en pourcentage en poids de la formulation, entre 5% et 30%, particulièrement entre 10% et 30%, plus particulièrement encore entre 15% et 25%.

7. Utilisation selon l'une des revendications précédentes, **caractérisée en ce que** le solvant comprend, en pourcentage en poids par rapport à la formulation, entre 50% et 90% de propane-1,3-diol, particulièrement entre 60% et 90%, plus particulièrement entre 60 et 80%.

8. Utilisation selon l'une des revendications précédentes, **caractérisée en ce que** la formulation liquide comprend en outre de l'acide citrique ou un sel de l'acide citrique ou un ester de l'acide citrique.

9. Utilisation selon l'une des revendications précédentes pour la visite de ruches ou pour le traitement ou la prévention de l'infestation des ruches par un parasite, en particulier le varroa.

10. Méthode de visite de ruche comprenant les étapes suivantes
i) vaporiser une formulation liquide telle que définie dans l'une des revendications 1 à 8 via un dispositif de type enfumoir électronique doté d'un réservoir contenant ladite formulation, d'un moyen de vaporisation de ladite formulation et d'un moyen de génération d'un flux d'air,
ii) distribuer la vapeur formée à l'étape i) sur et dans la ruche.

11. Méthode de traitement ou de prévention de parasite des ruches comprenant les étapes suivantes :
i) vaporiser une formulation liquide telle que définie dans l'une des revendications 1 à 8 comprenant au moins une huile essentielle de thym, via un dispositif de type enfumoir électronique doté d'un réservoir contenant ladite formulation, d'un moyen de vaporisation de ladite formulation et d'un moyen de génération d'un flux d'air,
ii) distribuer la vapeur formée à l'étape i) sur et dans la ruche.

## Patentansprüche

1. Verwendung einer flüssigen Formulierung in einem elektronischen Bienenstockraucher zur Erzeugung einer Dampfwolke, wobei die Formulierung umfasst:
- ein Lösungsmittel, das eine Mischung aus 1,3-Propandiol und Glycerin umfasst oder aus dieser besteht, und
- mindestens flüchtige organische Flüssigkeit.

2. Verwendung nach Anspruch 1, **dadurch gekennzeichnet, dass** die flüchtige organische Flüssigkeit ein flüchtiges ätherisches Öl ist, insbesondere ein flüchtiges pflanzliches ätherisches Öl.

3. Verwendung nach Anspruch 2, **dadurch gekennzeichnet, dass** das flüchtige ätherische Öl aus der Gruppe bestehend aus ätherischem Eukalyptusöl, ätherischem Lavendelöl, ätherischem Thymianöl, ätherischem Zitronengrasöl, ätherischem Pfefferminzöl, ätherischem Salbeiöl, ätherischem Nelkenöl, ätherischem Geraniumöl, vorzugsweise Rosengeranie, ätherischem Bittermandelöl, ätherischem Lavandinöl sowie deren Mischungen ausgewählt wird.

4. Verwendung nach Anspruch 3, **dadurch gekennzeichnet, dass** das pflanzliche ätherische Öl eine Mischung aus ätherischem Nelkenöl, ätherischem Bittermandelöl, ätherischem Thymianöl umfasst.

5. Verwendung nach einem der vorhergehenden Ansprüche, **dadurch gekennzeichnet, dass** die Lösungsmittelmenge in Gewichtsprozent der Formulierung zwischen 70 % und 95 %, insbesondere zwischen 75 % und 90 %, vor allem zwischen 75 % und 90 % oder sogar zwischen 80 % und 90 % liegt.

6. Verwendung nach einem der vorhergehenden Ansprüche, **dadurch gekennzeichnet, dass** die Menge der flüchtigen organischen Flüssigkeit in Gewichtsprozent der Formulierung zwischen 5 % und 30 %, insbesondere zwischen 10 % und 30 %, vor allem zwischen 15 % und 25 % liegt.

7. Verwendung nach einem der vorhergehenden Ansprüche, **dadurch gekennzeichnet, dass** das Lösungsmittel in Gewichtsprozent bezogen auf die Formulierung zwischen 50 % und 90 %, insbesondere zwischen 60 % und 90 %, vor allem zwischen 60 und 80 % 1,3-Propandiol umfasst.

8. Verwendung nach einem der vorhergehenden Ansprüche, **dadurch gekennzeichnet, dass** die flüssige Formulierung ferner Zitronensäure oder ein Zitronensäuresalz oder einen Zitronensäureester umfasst.

9. Verwendung nach einem der vorhergehenden Ansprüche zur Inspektion von Bienenstöcken oder zur Behandlung oder Vorbeugung des Befalls der Bienenstöcke durch einen Parasiten, insbesondere Varroa.

10. Methode der Bienenstockinspektion, die folgende Schritte umfasst
i) Verdampfen einer flüssigen Formulierung gemäß einem der Ansprüche 1 bis 8 über eine elektronische Rauchvorrichtung mit einem Behälter, der die Formulierung enthält, einem Mittel zur Verdampfung der Formulierung und einem Mittel zur Erzeugung eines Luftstroms,
ii) Verteilen des in Schritt i) gebildeten Dampfes auf und im Bienenstock.

11. Methode zur Behandlung oder Vorbeugung des Befalls von Bienenstöcken durch Parasiten, die folgende Schritte umfasst:
i) Verdampfen einer flüssigen Formulierung gemäß einem der Ansprüche 1 bis 8, die mindestens ein ätherisches Thymianöl umfasst, über eine elektronische Rauchvorrichtung mit einem Behälter, der die Formulierung enthält, einem Mittel zur Verdampfung der Formulierung und einem Mittel zur Erzeugung eines Luftstroms,
ii) Verteilen des in Schritt i) gebildeten Dampfes auf und im Bienenstock.

## Claims

1. Use of a liquid formulation in an electronic beehive smoker for vapour cloud generation, said formulation comprising:
- a solvent comprising, or consisting of, a mixture of propane-1,3-diol and glycerol, and
- at least volatile organic liquid.

2. Use according to claim 1, **characterised in that** the volatile organic liquid is a volatile essential oil, more particularly a volatile plant essential oil.

3. Use according to claim 2 **characterised in that** the volatile essential oil is selected from the group consisting of eucalyptus essential oil, lavender essential oil, thyme essential oil, lemongrass essential oil, peppermint essential oil, sage essential oil, clove essential oil, geranium essential oil, preferably geranium rosat, bitter almond essential oil, lavandin essential oil, as well as mixtures thereof.

4. Use according to claim 3, **characterised in that** the plant essential oil comprises a mixture of clove essential oil, bitter almond essential oil, thyme essential oil.

5. Use according to one of the preceding claims **characterised in that** the amount of solvent is comprised, as a percentage by weight of the formulation, between 70% and 95%, particularly between 75% and 90%, more particularly still between 75% and 90%, or even between 80% and 90%.

6. Use according to one of the preceding claims **characterised in that** the amount of volatile organic liquid is comprised, as a percentage by weight of the formulation, between 5% and 30%, particularly between 10% and 30%, more particularly still between 15% and 25%.

7. Use according to one of the preceding claims, **characterised in that** the solvent comprises, as a percentage by weight relative to the formulation, between 50% and 90% propane-1,3-diol, particularly between 60% and 90%, more particularly between 60 and 80%.

8. Use according to one of the preceding claims, **characterised in that** the liquid formulation further comprises citric acid or a salt of citric acid or an ester of citric acid.

9. Use according to one of the preceding claims for visiting beehives or for the treatment or prevention of infestation of beehives by a parasite, in particular varroa.

10. Method of beehive visiting comprising the following steps
i) vaporising a liquid formulation as defined in one of claims 1 to 8 via an electronic smoker type device provided with a tank containing said formulation, a means of vaporising said formulation and a means of generating an air flow,
ii) distributing the vapour formed in step i) on and into the beehive.

11. Method of treatment or prevention of beehive parasites comprising the following steps:
i) vaporising a liquid formulation such as defined in one of claims 1 to 8 comprising at least one thyme essential oil, via an electronic smoker type device provided with a tank containing said formulation, a means of vaporising said formulation and a means of generating an air flow,
ii) distributing the vapour formed in step i) on and into the beehive.
